# EUROPEAN PATENT SPECIFICATION

(11) **EP 2 736 296 B1**
(45) Date of publication and mention of the grant of the patent: **06.11.2019**
(21) Application number: 12360078.5
(22) Date of filing: 21.11.2012
(51) Int. Cl.: H04W 72/12, H04W 84/04, H04W 48/12

(54) **Scheduling in a cooperative heterogenous network**
Scheduling in einem kooperativen heterogenen Netzwerk
Scheduling dans un réseau hétérogène coopératif

(43) Date of publication of application: 28.05.2014
(73) Proprietor: Alcatel Lucent, 91620 Nozay (FR)
(72) Inventor: Lopez-Perez, David, Blanchardstown, Dublin 15 (IE); Claussen, Holger, Blanchardstown, Dublin 15 (IE)
(74) Representative: Coghlan, Judith Elizabeth Kensy

(56) References cited:
- US-A1- 2011 053 604
- US-A1- 2011 223 915
- US-A1- 2012 108 255
- US-A1- 2012 201 164
- ERICSSON (RAPPORTEUR): "TP on UL Interference solutions for Carrier Based HetNet", 3GPP DRAFT; R3-120884_UL_INTERFERENCE_HETNET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Cabo; 20120326 - 20120330 2 April 2012 (2012-04-02), XP050669227, Retrieved from the Internet: URL:http://www.3gpp.org/ftp/tsg_ran/WG3_Iu /TSGR3_75bis/Docs/ [retrieved on 2012-04-02]

## Description

### FIELD OF THE INVENTION

The present invention relates to a small cell base station, a macro base station, methods, computer program products and a wireless telecommunications network.

### BACKGROUND

Wireless telecommunication systems are known. In such systems, mobile communication devices (for example, mobile telephones) are operable to communicate with base stations provided by network providers.

In known wireless telecommunication systems, radio coverage is provided to network connectable devices, such as mobile telephones, or wireless devices such as iPads or other similar tablets, within areas known as cells. A base station is located in each cell to provide radio coverage. Typically, network connectable devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Traditional base stations provide coverage in relatively large geographical areas and those cells are often referred to as macro cells. It is possible to provide a heterogeneous network (hetnet) where smaller sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Although the deployment of such small cell base stations can provide advantages, unexpected consequences can occur.

Accordingly, it is desired to provide an improved technique for the operation of heterogeneous networks.

US 2012/0201164 addresses transmitting data to a mobile station in wide-area wireless networks, heterogeneous networks and cellular (LTE) networks. In this document, a method is proposed that enables transmitting the physical downlink data channel to the mobile station from the primary high-power transmitting node and from one of the secondary low-power transmitting nodes, so as to transmit the data to the mobile station in the wide-area wireless network. The method enables allowing a user equipment (UE) capable of receiving and processing UE specific reference symbols to receive shared data transmissions from low power transmission points and high power transmission points using the UE-specific reference symbols to characterize a transmission channel, so that data rates and signal reliability are improved.

US 2011/053604 discloses a set of frequency and time resources that can potentially be shared by macrocells and femtocells. In this document a hierarchical cell structure is proposed in which the umbrella macrocell is able to assign a sub set of resources to each underlying femtocell to coordinate inter-cell interference. Thus, the macrocell acts as a resource broker from the resource allocation viewpoint. In order to achieve this, each femtocell is configured with a user identity and the macrocell, upon receiving feedback from the femtocell (e.g., number of channels, service requirements, etc.) is able to assign resources to each femtocell as it would assign them to standard users. In this case, each femtocell is a standard femtocell and is configured with its own physical cell identity, which is different from that of the umbrella macrocell and those of the neighbouring femtocells. Thus, users will still attempt to perform a handover from the umbrella macrocell to the underlay femtocell when it is in the proximity of the latter, and may incur handover failure due to too early or too late handovers.

US 2012/108255 describes a similar system to that of US 2011/053604.

"TP on UL interference solutions for carrier based HetNet" R3-120884 disclosed by Ericsson as a 3GPP draft at Sophia Antipois on 2 April 2012 addresses the issue of a macrocell uplink user located nearby a picocell base station interfering with the uplink transmissions of such a picocell base station. The authors propose two different sets of techniques to avoid this issue. In the first set, the interfering macrocell user is identified by the macrocell base station with the help of the picocell base station and the macrocell re-schedules the interfering user with other resource (time, frequency, etc.) to avoid interference. In the second set, the picocell re-schedules its interfered uplink users in other resources (time, frequency, etc.) to avoid interference.

US 2011/0223915 considers a network where macrocells and small cells operate in a different frequency band. Therefore, handovers will never fail due to inter-cell interference, and the main issue is that a user, which is operating in one frequency band, e.g. the macrocell one, may miss the existence of a small cell because this one is working in a different frequency band.

### SUMMARY

Accordingly, a first aspect provides a small cell base station deployable in a wireless telecommunications network in which at least one macro base station provides a first region of radio coverage, said small cell base station being operable to provide a second region of radio coverage within said first region of radio coverage, said small cell base station comprising:
determination logic operable to determine key system information for broadcast, said key system information comprising cell-specific identity information such that broadcasting the same key system information by said at least one macro base station and said small cell base station makes them appear identical to user equipment (50) operating in said first and second region of radio coverage;
resource reservation logic operable to determine at least one resource block reserved for small cell use by receiving an allocation of said at least one resource block reserved for small cell use from said at least one macro base station;
broadcast logic operable to broadcast said key system information, said at least one resource block reserved for small cell use being used for broadcast of said cell-specific identity information; and
scheduling logic operable to receive channel quality indicator measurement information from user equipment based on said broadcast system information received at said user equipment, said channel quality indicator measurement information comprising an indication of whether said user equipment is operating in said second region of radio coverage; said scheduling logic being operable to base scheduling decisions for said user equipment on said received channel quality indicator measurement information.

The first aspect recognizes that heterogeneous networks (HetNets) pose challenges in mobility management within a network, since use of small cells results in a large number of deployed cells each having a small region of radio coverage than a macro cell and increases handovers and attempted handover events. An increase in mobility events typically results in increased network signaling and network overhead.

Furthermore, since handover parameters, such as hysteresis and time to trigger, are typically optimized for macrocells rather than small cells, the number of handover failures and ping-pongs experienced by users of a HetNet may result in call drops and thus subscriber dissatisfaction and churn.

To some extent, in networks operating according to Long Term Evolution (LTE) architectures, mobility issues can be addressed by optimizing handover parameters, for example, by tuning a time-to-trigger parameter. Such an optimization would need to be performed on a per-cell and per-user basis in dependence upon cell size and user velocity. Such individual optimization is also likely to increase network signaling and overhead. Such optimization techniques may be best implemented if related to user velocity due to the trade off between handover failures and ping pongs and an estimate of user velocity is not easy to obtain in a HetNet scenario.

Mobility issues may also be addressed by using inter-cell interference coordination techniques. For example, small cells may be operable to release use of defined resources, such that macrocells can schedule high-mobility users in those defined resources without inter-cell interference from small cells. As a result high-mobility users seamlessly move across small cells whilst connected to macrocells. Tight synchronization among the scheduling of macrocells and small cells may be required to fully realize such a solution and reserving resources in such a manner can significantly affect spatial reuse due to unused resources at small cells, leading to less efficient overall network operation.

Aspects and embodiments described herein may provide a novel cell configuration method which can enhance mobility performance whilst maintaining a large degree of spatial reuse.

The first aspect particularly recognizes that by broadcasting key system information and identity information from the small cell base station such that it appears identical to an umbrella macro base station, the issue of handover and ping pong effects can be substantially mitigated. In particular, the first aspect provides a small cell base station operable such that an umbrella macrocell and each small cell provided within a radio coverage region supported by the umbrella macrocell are operable to transmit the same system information. As a result, user equipment within the radio coverage regions supported are unaware that they may be in a region of radio coverage supported by a small cell base station as they move through the region of radio coverage supported by the umbrella macrocell.

For example, in the downlink, an umbrella macrocell and overlaid small cells are operable to transmit identical key system information, for example, primary synchronization signal (PSS), secondary synchronization signal (SSS), cell-specific reference signal (CRS), master information block (MIB), system information block (SIB) and/or control channel size information, mapped onto the same resource elements. The key system information which is identical is selected such that user equipment traversing a region "sees" only one cell, rather than the macro cell and each small cell.

As a result of such a network configuration, there is no need for user equipment to trigger handovers as it moves around the umbrella macrocell and small cells, and thus handover failures and ping-pong effects are mitigated. Mobile users can move across a cooperative heterogeneous cell formed from an umbrella macrocell and underlying small cells having the same identity information as the umbrella macrocell with enhanced mobility performance. That is to say, since the umbrella macrocell and small cells use the same physical cell identity and appear to be a single cell to users, physical cell identity collision and confusion issues among the cells can also be avoided.

The first aspect further recognises that implementation of cooperative heterogeneous cells without further changes to macro and small cell base stations may cause issues in relation to spatial reuse. Aspects and embodiments describe a network configuration which provide a_cell-size-specific reference signal configuration and proximity identification approach that allows: differentiation of macrocell users from small cell users within a cooperative heterogeneous cell, and performance of independent scheduling decisions at the umbrella macrocell and small cells. That is to say, the transmission of key system information by a small cell base station and a macro base station in accordance with the first aspect may be used as a means to determine scheduling of user equipment.

The first aspect recognizes that in order to allow spatial reuse within the cells forming a cooperative heterogeneous cell, it is helpful to coordinate which cell is to take scheduling decisions for each user. In order to facilitate such coordination the available bandwidth can be divided, in one example, into two orthogonal subbands and a cell-size-specific reference symbol configuration is implemented. Use of such a cell-size-specific reference symbol configuration in a cooperative heterogeneous cell i can allow base stations forming the cooperative cell to distinguish macrocell users from small cell users through, for example, their channel quality indicator measurement informations, broadcast from user equipment to all base stations in the network.

Traditionally the mapping of cell-specific reference symbols onto resource elements of RBs is used to determine cell identity and the mapping is the same for all RBs of a cell. The proposed configuration follows the same procedure, in that as far as user equipment is aware, all resource blocks within the cooperative hetnet appear to have the same cell identity. The user equipment is unaware that some are being transmitted by an umbrella macrocell and others are being broadcast by the small cells. Such a "rearrangement" does not impact legacy user equipment, since the same mapping of cell-specific reference symbols onto resource elements of RBs is used for all RBs in the cooperative heterogeneous cell.

In one embodiment, determining key system information comprises receiving a system message comprising the key system information. In one embodiment, determining key system information comprises monitoring broadcast messages within the network to receive an indication of the key system information. At a macrocell level, mapping of key system information (for example, primary synchronization signal, secondary synchronization signal, cell-specific reference signal, master information block, system information block and control channel size information) on to resource elements and the configuration of resource elements for the reception of key user information (for example, random access preamble and channel quality indicators) is substantially static and typically does not change in a very dynamic manner. As a result, small cells operating within a region of coverage supported by a macrocell base station may be operable to determine the appropriate macrocell configuration substantially independently rather than on commissioning of the base stations forming a network. A small cell base station may be operable to determine an umbrella macrocell configuration, for example, by interrogating or receiving information from an operation, administration, and maintenance (OAM) system within the wireless network, or by operating in a user/sniffing mode, connecting to the appropriate macrocell, learning the relevant key parameters and tuning its own operational parameters accordingly before operating as a small cell base station within the umbrella region.

In one embodiment, the at least one resource block reserved for small cell use is orthogonal to at least one remaining resource block. In one embodiment, the resource blocks may be split into two sets: a set of resource blocks allocated to macro cell use and a set of resource blocks reserved for small cell use. Those two sets may be distinct, with no overlap, and may together represent entire available bandwidth in the network. That is to say, the set of resource blocks allocated to macro cell use and the set of resource blocks reserved for small cell use may together represent all resource blocks available for use. In one embodiment, the at least one resource block reserved for small cell use is orthogonal to all resource blocks reserved for use by a macro base station for the transmission of broadcast information.

In one embodiment, the allocation of the at least one resource block reserved for small cell use comprises a static allocation. In one embodiment, the allocation of the at least one resource block reserved for small cell use comprises an allocation generated in response to ambient network condition. It will be appreciated that the relative size of each subband may be dynamically selected according to traffic load statistics among network tiers. In one embodiment, determining at least one resource block reserved for small cell use comprises receiving an allocation of the at least one resource block reserved for small cell use from a network control node. That network control node may comprise a network operations administration and management (OAM) node.

In one embodiment, the identity information comprises a physical cell identity. In one embodiment, the key system information comprises one or more of: primary synchronization signal, secondary synchronization signal, cell-specific reference signal, master information block, system information block and control channel size information.

In one embodiment, the indication comprises at least one channel quality indicator. Traditionally the mapping of cell-specific reference symbols onto resource elements of RBs is used to determine cell identity and the mapping is the same for all RBs of a cell. The proposed configuration follows the same procedure, in that as far as user equipment is aware, all resource blocks within the cooperative hetnet appear to have the same cell identity. The user equipment is unaware that some are being transmitted by an umbrella macrocell and others are being broadcast by the small cells. Such a "rearrangement" does not impact legacy user equipment, since the same mapping of cell-specific reference symbols onto resource elements of RBs is used for all RBs in the cooperative heterogeneous cell. The proposed cell-size-specific reference symbol transmissions can be taken into account by base stations in the cooperative hetnet cell when receiving channel quality indicator measurements fed back from users to nodes to assist the scheduling procedure. In particular, those measurements reported by user equipment are performed over all cell-size-specific reference symbols. As a result, user equipment that is close to a small cell will report through its channel quality indicators a higher signal quality in the small cell subband than in the macrocell subband. The opposite is true for users that are far from small cells. Based on reported channel quality indicators broadcast by user equipment and received by all nodes, that is to say, both the umbrella macrocell base station and small cell base stations, the nodes are able to classify users as macrocell users or small cell users.

In one embodiment, the indication comprises an indication of small cell pilot power received by the user equipment. Use of a cell-size-specific reference signal allows an alternative to use of a classic reference signal received power (RSRP) based approach, which cannot be applied within a cooperative heterogeneous cell since all its nodes transmit the same reference signal. However, if several small cells receive the channel quality indicator of a user with a better quality in the small subband than in the macrocell subband, these small cells may be operable, according to some embodiments, to coordinate, for example, via X2 signaling to determine which small cell will serve/schedule that user. Furthermore, in some embodiments, comparison of received signal strength of channel quality indicators across the small cell region may be used to determine which small cell should schedule a particular user. A high received signal strength could indicate that the user is very close to a particular small cell base station and thus scheduling decisions for that user may be taken by that small cell base station.

In some embodiments, if the measurement information indicates the user equipment is operating in the second region of radio coverage, the scheduling logic is operable to take scheduling decisions for the user equipment. Use of a cell-size-specific reference signal configuration as described allows, for example, an umbrella macrocell to compare the quality of the macrocell subband and the small cell subband for each user equipment broadcasting such measurement information and, if the former is better than the latter, the umbrella macrocell may be operable to proceed with scheduling of that user equipment. According to some embodiments, there may be no need for explicit coordination between the umbrella macrocell and small cells for user differentiation, which can be advantageous.

In one embodiment, the scheduling logic is operable to take scheduling decisions for the user equipment and schedule the user equipment to operate using the at least one resource block reserved for small cell use. Accordingly, if a user is a small cell user, a nearby small cell will typically be operable to take care of its scheduling decisions. Those scheduling decisions will typically be performed over the small cell band and use corresponding small cell band channel quality indicators.

If, however, a user is determined to be a macrocell user, the umbrella macrocell will typically take care of its scheduling decisions. Those scheduling decisions may be performed over the macrocell band or over the small cell subband.

In particular, according to some embodiments, macrocell users may be scheduled over the small cell subband if they report a very low signal quality in the small cell subband, since this is indicative that there are no small cells in the vicinity of the user and thus interference caused by scheduling the user to use small cell subbands is likely to be small. In this case, since the macrocell does not transmit cell-specific reference signals over the small cell subband, scheduling is assisted by channel quality indicators performed over the macrocell subband which act as wideband channel quality indicators.

Using such an approach, cross-tier interference among the umbrella macrocell and overlaid small cells can be significantly mitigated, and a large degree of spatial reuse can be achieved, thus improving overall network operation.

A second aspect provides a method of providing a second region of radio coverage in a wireless telecommunications network in which at least one macro base station (20) provides a first region of radio coverage, a small cell base station being operable to provide said second region of radio coverage within said first region of radio coverage, said method comprising:
determining key system information for broadcast such that said at least one macro base station and said small cell base station appear identical to user equipment operating in said first and second region of radio coverage by broadcasting the same key system information, said key system information comprising cell-specific identity information;
determining at least one resource block reserved for small cell use by receiving an allocation of said at least one resource block reserved for small cell use from said at least one macro base station;
broadcasting said key system information, said at least one resource block reserved for small cell use being used for broadcast of said cell-specific identity information;
receiving channel quality indicator measurement information from user equipment based on said broadcast system information received at said user equipment, said channel quality indicator measurement information comprising an indication of whether said user equipment is operating in said second region of radio coverage; and basing scheduling decisions for said user equipment on said received channel quality indicator measurement information.

In one embodiment, determining key system information comprises receiving a system message comprising the key system information.

In one embodiment, determining key system information comprises monitoring broadcast messages within the network to receive an indication of the key system information.

In one embodiment, at least one resource block reserved for small cell use is orthogonal to at least one remaining resource block. In some embodiments all resource blocks reserved for small cell use are orthogonal to resource blocks reserved for use by an umbrella macrocell. The resource blocks reserved for use by an umbrella macrocell may be used for the transmission of broadcast information.

Determining at least one resource block reserved for small cell use comprises receiving an allocation of the at least one resource block reserved for small cell use from the at least one macro base station. That allocation may be received from a network OAM (operation administration and management) subsystem.

In one embodiment, the allocation of the at least one resource block reserved for small cell use comprises a substantially static or semi-static, allocation.

In one embodiment, allocation of the at least one resource block reserved for small cell use comprises an allocation generated in response to ambient network condition.

In one embodiment, the identity information comprises a physical cell identity.

In one embodiment, the indication comprises at least one channel quality indicator.

In one embodiment, the indication comprises an indication of small cell pilot power received by the user equipment.

In one embodiment, if the measurement information indicates the user equipment is operating in the second region of radio coverage, taking scheduling decisions for the user equipment.

In one embodiment, taking scheduling decisions for the user equipment comprises scheduling the user equipment to operate using the at least one resource block reserved for small cell use.

A third aspect provides a computer program product operable, when executed on a computer, to perform the method of the second aspect.

A fourth aspect provides a macro cell base station deployable in a wireless telecommunications network in which said macro base station is operable to provide a first region of radio coverage and at least one small cell base station provides a second region of radio coverage within said first region of radio coverage, said macro cell base station comprising:
resource reservation logic operable to determine at least one resource block reserved for macro cell use, and at least one resource block reserved for small cell use;
resource allocation logic operable to allocate said at least one resource block to be reserved for small cell use and said at least one resource block to be reserved for macro cell use;
broadcast logic operable to broadcast key system information using said at least one resource block reserved for macro cell use to user equipment operating in said first and second region of radio coverage, said key system information comprising cell-specific identity information, such that broadcasting the same key system information by said macro base station and said at least one small cell base station makes them appear identical to user equipment operating in said first and second region of radio coverage;
scheduling logic operable to receive channel quality indicator measurement information from user equipment based on said broadcast system information, said broadcast key system information being identical for said macro cell and for said at least one small cell;
said channel quality indicator measurement information comprising an indication of whether said user equipment is operating in said first region of radio coverage or in said second region of radio coverage; said scheduling logic being operable to base scheduling decisions for said user equipment on said received channel quality indicator measurement information.

The fourth aspect recognises that a macro base station supporting an umbrella cell within which one or more small cells support regions of radio coverage must cooperate its operation with that of the small cell base station in order for a small cell in accordance with the first aspect to operate efficiently. That is to say, the at least one resource block reserved for macro cell use is to be distinct from the at least one resource block reserved for small cell use. In other words, the macro cell is operable to use resource blocks which are not the at least one resource block reserved for small cell use. By transmitting key system information, and in particular, identity information, using the resource blocks which are not the at least one resource block reserved for small cell use, it is possible for measurement information broadcast by user equipment in the first and/or second region of coverage to implicitly report whether it is operating within a small cell region or the macro cell region of radio coverage of a cooperative cell.

The macro base station comprises: resource allocation logic operable to allocate resource blocks to be reserved for macro cell use or small cell use.

Accordingly, the available bandwidth may be apportioned or allocated by appropriate logic provided by the core network or at the macro base station. The relative allocation of resource blocks for small cell use and macro cell use may be dependent upon, for example, the number of small cells provided within the first region of radio coverage supported by the macro base station, or may be determined based upon historical network usage by user equipment in the geographical area of interest, and/or may be dynamically variable in dependence upon an indication of distribution of user equipment across the macro cell and small cell layers of a heterogeneous network.

In one embodiment, all available resource blocks are allocated to be either resource blocks to be reserved for macro cell use or resource blocks to be reserved for small cell use. In other words, all available bandwidth is allocated to either the macro cell or small cell region of operation in relation to transmission of key system information and, in particular, cell identity information. In some embodiments, there may be a region of bandwidth which is neither reserved for small cell or for macro cell use alone. In one embodiment, determining at least one resource block reserved for macro cell use comprises determining an allocation generated in response to an indication of ambient network condition.

In one embodiment, the resource blocks to be reserved for macro cell use are orthogonal to resource blocks to be reserved for small cell use.

In one embodiment, the at least one resource block reserved for macro cell use is orthogonal to at least one remaining resource block. In one embodiment, the at least one remaining resource block comprises at least one resource block reserved for small cell use.

In one embodiment, the cell-specific identity information comprises a physical cell identity.

In one embodiment, the indication comprises at least one channel quality indicator.

In one embodiment, if the measurement information indicates the user equipment is operating in the first region of radio coverage, the scheduling logic is operable to take scheduling decisions for the user equipment. Accordingly, the macro cell base station is operable to schedule those user equipment which are determined to lie outside the second region of radio coverage supported by a small cell base station.

In one embodiment, the scheduling logic is operable to take scheduling decisions for the user equipment and schedule the user equipment to operate using the at least one resource block reserved for macro cell use. In one embodiment, the scheduling logic is operable to take scheduling decisions for the user equipment and schedule the user equipment to operate using any available resource block.

In some embodiments, in order to avoid inter-cell interference amongst the control channels of the umbrella macrocell and small cells, the umbrella macrocell is operable to map scheduling decisions onto resource elements that are not used in the control region of small cells and vice versa. This kind of coordination can be achieved through macrocell and small cell cooperation. For example, if the umbrella macrocell and small cells are connected via a non-guaranteed performance back-haul link (macrocell-femtocell case) coordination may be implemented in a semi-static manner by implementing pre-planned macrocell-small cell control region usage. However, if the umbrella macrocell and overlaid small cells are connected though a high performance back-haul link (macrocell-picocell case) coordination may be performed in a more dynamic manner. In this case, control channel coding and mapping may be cooperatively performed, as in a cooperative relay paradigm.

Once coordination regarding control channel usage is achieved, small cells can locally reuse the control channel region area unused by an umbrella macrocell and co-tier interference among the control channels of small cells can be mitigated through classical approaches.

By enabling independent scheduling decisions across nodes of a cooperative heterogeneous cell, it is possible to achieve a significant degree of spatial reuse.

A fifth aspect provides a method of providing a first region of coverage in a wireless telecommunications network in which at least one macro base station is operable to provide said first region of radio coverage and at least one small cell base station provides a second region of radio coverage within said first region of radio coverage, said method comprising:
determining at least one resource block reserved for macro cell use and at least one resource block reserved for small cell use;
allocating said at least one resource block to be reserved for small cell use and said at least one resource block to be used for macro cell use;
broadcasting key system information using said at least one resource block reserved for macro cell use to user equipment operating in said first and second region of radio coverage, said key system information comprising cell-specific identity information such that broadcasting the same key system information by said at least one macro base station and said at least one small cell base station makes them appear identical to user equipment operating in said first and second region of radio coverage;
receiving channel quality indicator measurement information from user equipment based on said broadcast system information received at said user equipment, said channel quality indicator measurement information comprising an indication of whether said user equipment is operating in said first region of radio coverage or in said second region of radio coverage; and
basing scheduling decisions for said user equipment on said received channel quality indicator measurement information.

In one embodiment, the at least one resource block reserved for macro cell use is orthogonal to at least one remaining resource block.

In one embodiment, all available resource blocks are allocated to be either resource blocks to be reserved for macro cell use or resource blocks to be reserved for small cell use.

In one embodiment, resource blocks to be reserved for macro cell use are orthogonal to resource blocks to be reserved for small cell use.

In one embodiment, determining at least one resource block reserved for macro cell use comprises determining an allocation generated in response to an indication of ambient network condition.

In one embodiment, identity information comprises a physical cell identity.

In one embodiment, the indication comprises at least one channel quality indicator.

In one embodiment, if the measurement information indicates the user equipment is operating in the first region of radio coverage, taking scheduling decisions for the user equipment.

According to one embodiment, the method comprises taking scheduling decisions for the user equipment and scheduling the user equipment to operate using the at least one resource block reserved for macro cell use.

According to one embodiment, the method comprises taking scheduling decisions for the user equipment and scheduling the user equipment to operate using any available resource block.

A sixth aspect provides a computer program product operable, when executed on a computer, to perform the method of the fifth aspect.

A seventh aspect provides a wireless telecommunications network comprising: at least one macro base station according to a fourth aspect, operable to provide a first region of radio coverage; and at least one small cell base station according to a first aspect, operable to provide a second region of radio coverage within said first region of radio coverage; said broadcast logic of said macro base station and said small cell base station each being operable to broadcast identical key system information comprising identity information such that said macro base station and said small cell base station appear identical to user equipment operating in said first and second region of radio coverage.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates the main components of a telecommunications network;
Figure 2 illustrates schematically a relationship between handover failures, ping-pongs,
user velocity and time to trigger;
Figure 3a illustrates schematically one possible heterogeneous network configuration;
Figure 3b illustrates schematically an example of one possible heterogeneous network configuration in accordance with one embodiment;
Figure 4 illustrates schematically one example of spatial reuse in a cooperative heterogeneous network in accordance with one embodiment;
Figure 5 illustrates schematically an example of a cell-size-specific reference symbol configuration in accordance with one embodiment; and
Figure 6 illustrates schematically control channel region usage of a macrocell and small cell base station in accordance with one embodiment.

### DESCRIPTION OF THE EMBODIMENTS

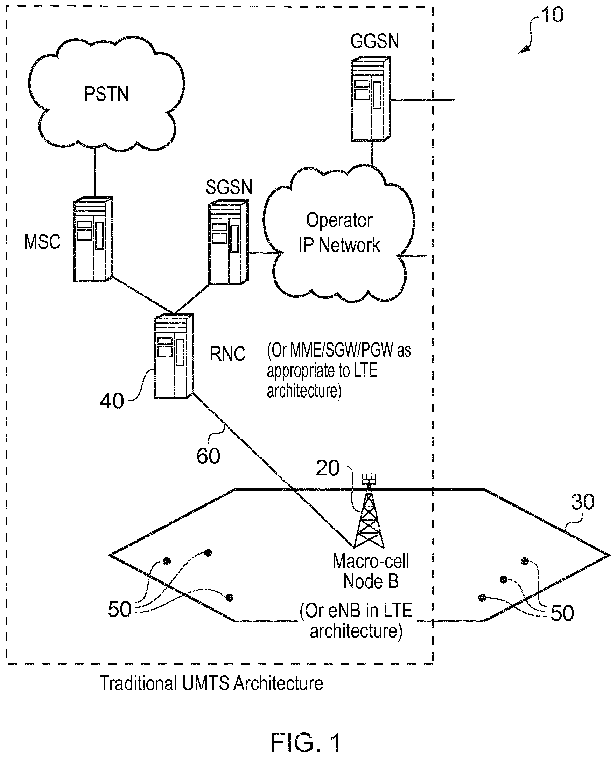

Figure 1 illustrates schematically the main components of a wireless telecommunications network 10. In the UMTS network architecture illustrated user equipment 50 roam through the wireless telecommunications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small subset of a total number of user equipment and base stations that may be present in a typical communication network. It will also be appreciated that different network archtectures may be implemented, including, for example a Long Term Evolution (LTE) network in which the functionality provided by network nodes described above is provided by network nodes which are named differently but have analogous functionality.

Heterogeneous networks (HetNets) pose challenges in mobility management within a network, since use of small cells results in a large number of deployed cells each having a small region of radio coverage than a macro cell and increases handovers and attempted handover events. An increase in mobility events typically results in increased network signaling and network overhead.

Furthermore, since handover parameters, such as hysteresis and time to trigger, are typically optimized for macrocells rather than small cells, the number of handover failures and ping-pongs experienced by users of a hetnet may result in call drops and thus subscriber dissatisfaction and churn.

To some extent, in networks operating according to Long Term Evolution (LTE) architectures, mobility issues can be addressed by optimizing handover parameters, for example, by tuning a time-to-trigger parameter. Such an optimization would need to be performed on a per-cell and per-user basis in dependence upon cell size and user velocity. Such individual optimization is also likely to increase network signaling and overhead. Such optimization techniques may be best implemented if related to user velocity and an estimate of user velocity is not easy to obtain in a HetNet scenario.

Mobility issues may also be addressed by using inter-cell interference coordination techniques. For example, small cells may be operable to release use of defined resources, such that macrocells can schedule high-mobility users in those defined resources without inter-cell interference from small cells. As a result high-mobility users seamlessly move across small cells whilst connected to macrocells. Tight synchronization among the scheduling of macrocells and small cells may be required to fully realize such a solution and reserving resources in such a manner can significantly affect spatial reuse due to unused resources at small cells, leading to less efficient overall network operation.

Aspects and embodiments described herein may provide a novel cell configuration method which can enhance mobility performance whilst maintaining a large degree of spatial reuse.

A capital issue in mobility performance optimization is finding an appropriate tradeoff between handover failures and ping-pongs. Optimizing handover parameters to reduce handover failures typically increases ping-pongs, and vice versa.

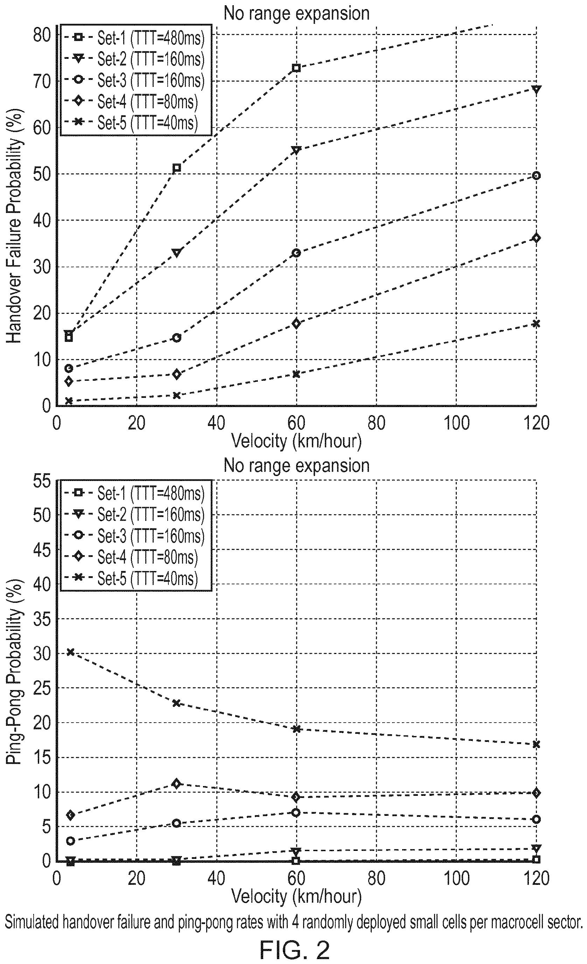

Figure 2 illustrates schematically a relationship between handover failures, ping-pongs, user velocity and time to trigger. As illustrated in Figure 2, reducing time to trigger may mitigate handover failures, since a handover typically occurs earlier and radio link failure can be avoided, but tends to increase ping-pong occurrances, since less physical layer one (Li) filtering and averaging is performed by user equipment when determining whether to request handover and fading impacts user measurements. The opposite is also true.

Thus handover optimization is an intricate problem, exacerbated by provision of a large number of small cells overlaid on a traditional macrocell network, in accordance with a HetNet deployment scenario.

User equipment velocity is also traditionally an important factor considered in relation to mobility events. In HetNets, high-mobility users are likely to be victim users, since as they pass through a small cell coverage region they may not be able to handover to that small cell, for example, due to time to trigger and handover processing time, even if the small cell could provide better radio link quality whilst the user is in the small cell coverage region. As a result, high-mobility users may experience radio link failure before handover is completed. Enhancement of mobility performance may be based upon an assessment of user velocity. It is, for example, possible to scale time to trigger using a user-specific factor *α* ∈ [0,1], selected as a function of a user velocity. According to such an approach, a high-mobility user (using a low *α* values) is operable to hand over to a target cell earlier than a low-mobility user (using high *α* values). Accordingly, handover failures may be reduced for high mobility users due to the implementation of a short time to trigger, and ping-pongs effects may be reduced for the low mobility users due to their implementation of a large time to trigger a handover event. Such an approach may not be suited to user equipment operating in a HetNet, since the approach does not prevent high-mobility user equipment requesting handover to a small cell, that handover proving unnecessary in view of the user having only a short time-of-stay in that small cell. As a result, implementation of such a method in a HetNet environment may increase ping-pongs effects for high mobility user equipment. Moreover, if a network is operable to select the factor a, network signaling (cell-to-user) is required, and if the user equipment is operable to select factor a, no degree of freedom is left to a network operator, that operator being in a position to better improve overall network performance by appropriate selection of *α* than user equipment.

It is also possible to implement a mobility-based inter-cell interference coordination scheme which combines handover parameter optimization with enhanced inter-cell interference coordination to reduce handover failures and ping-pong effects experienced by high and low mobility users. According to such a scheme, in order to protect high-mobility users from handover failures, small cells within a network are operable to release the use of preselected resources, such that macrocells can schedule their high-mobility users in these resources without inter-cell interference from small cells. Since users do not hand over small cells, ping-pongs are also mitigated.

Resource allocation according to such approaches can be coordinated in time, for example, by preselecting one or more subframe for use by high mobility users, in frequency, for example, by preselecting one or more component carrier for use by high mobility users, or in space, for example, by choosing beam directions. In addition, in order to protect low-mobility users from ping-pong effects, large times to trigger are allocated to low-mobility users.

It will be appreciated that adoption of this approach which splits available resources between high and low mobility users, provides mobility performance improvement at the expense of unused resources at small cells, which can significantly reduce overall network performance. That is to say, according to such approaches, a whole carrier or subframe is scarified in the frequency and time domain implementations, respectively.

It will be appreciated that both schemes described above rely upon detection of user mobility states, that is to say, whether a user is low-mobility or high-mobility, in order to select an appropriate user-specific factor *α* or apply enhanced inter-cell interference coordination.

### Overview

Before discussing embodiments in any more detail, first an overview will be provided. Aspects aim to improve mobility performance in a heterogeneous network whilst maintaining appropriate spatial reuse.

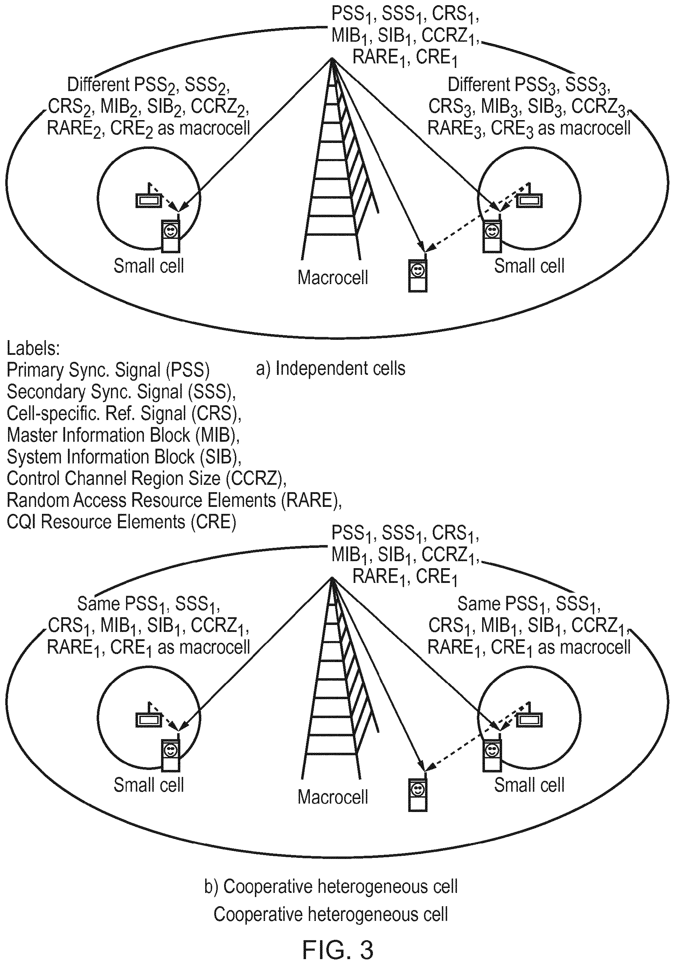

Figure 3a illustrates schematically one possible heterogeneous network configuration. According to the illustrated approach, an umbrella macrocell and small cells provided within the region of coverage supported by the umbrella macrocell each transmit different system information, such that user equipment are aware that they may be in a region of radio coverage supported by a small cell base station as they move through the region of coverage supported by the umbrella macrocell.

Figure 3b illustrates schematically an example of one possible heterogeneous network configuration in accordance with one embodiment. The configuration illustrated in Figure 3b is such that an umbrella macrocell and each small cell provided within a radio coverage region supported by the umbrella macrocell are operable to transmit the same system information such that user equipment are unaware that they may be in a region of radio coverage supported by a small cell base station as they move through the region of radio coverage supported by the umbrella macrocell.

In the configuration illustrated by Figure 3b, in the downlink, the umbrella macrocell and overlaid small cells are operable to transmit identical key system information, for example, primary synchronization signal (PSS), secondary synchronization signal (SSS), cell-specific reference signal (CRS), master information block (MIB), system information block (SIB) and/or control channel size information, mapped onto the same resource elements. The key system information which is identical is selected such that user equipment traversing a region "sees" only one cell, rather than the macro cell and each small cell.

In the uplink, the umbrella macrocell and overlaid small cells configure the same resource elements for the reception of key user information, for example, random access preamble and channel quality indicators. As a result, the umbrella macrocell and overlaid small cells form a cooperative heterogeneous cell that appears, from the perspective of user equipment, to be a single, unique cell.

As a result of such a network configuration, there is no need for user equipment to trigger handovers as it moves around the umbrella macrocell and its underlying small cells, and thus handover failures and ping-pong effects are mitigated. Mobile users can move across a cooperative heterogeneous cell comprising an umbrella macrocell and underlying small cells with enhanced mobility performance. Since the umbrella macrocell and small cells use the same physical cell identity and appear to be a single cell to users, physical cell identity collision and confusion issues among the cells can also be avoided.

Implementation of cooperative heterogeneous cells without further changes to macro and small cell base stations may cause issues in relation to spatial reuse. Since cooperative heterogeneous cell base stations would be less aware of where users are located within a region of coverage, for example, reports from user equipment indicating strong signal strength leave base stations unaware as to whether that user equipment is close to the umbrella macrocell base station, or close to a small cell base station, making difficult to identify which node should serve each user. Performing scheduling at the umbrella macrocell and using small cells as remote radio heads offers one solution to the problem but in order to address the spatial reuse problem intrinsic to cooperative heterogeneous cells, that is to say, that different small cells may allocate the same frequency resource to different users, and in order to avoid small cells acting as simple remote radio heads, aspects and embodiments describe a network configuration which provide a_cell-specific reference signal configuration and proximity identification approach that allows: differentiation of macrocell users from small cell users within a cooperative heterogeneous cell, and performance of independent scheduling decisions at the umbrella macrocell and small cells.

### Implementation

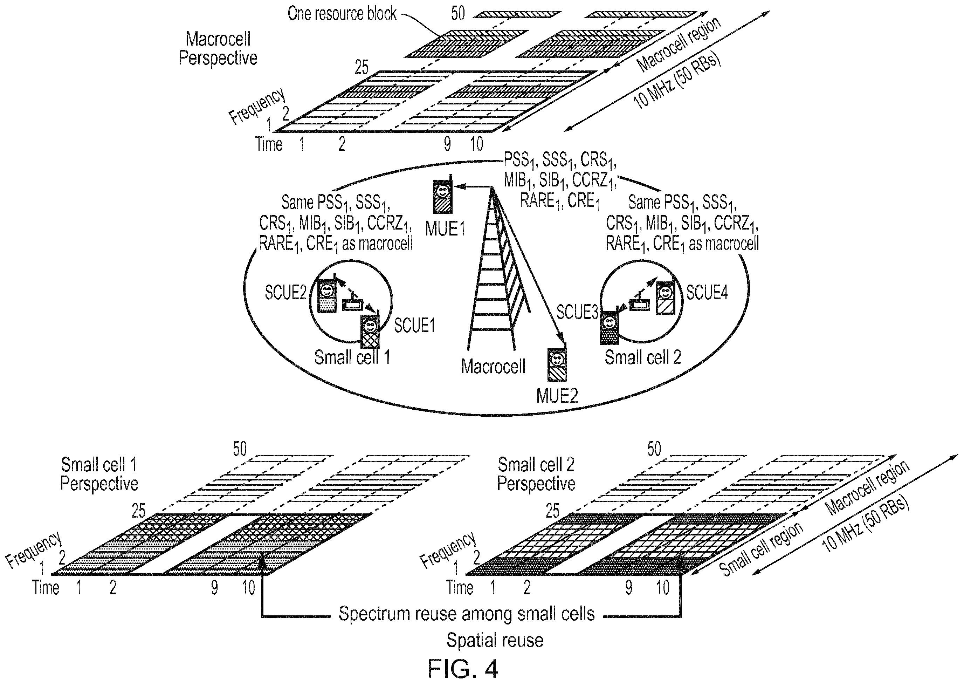

Figure 4 illustrates schematically one example of spatial reuse in a cooperative heterogeneous network in accordance with one embodiment. In the example illustrated in Figure 4, a cooperative heterogeneous cell comprises an umbrella macrocell (Macrocell) and two small cells (Small cell 1 and Small cell 2). The umbrella macrocell and the two small cells are operable to transmit the same system information. In the frequency domain, 10MHz bandwidth is available, divided into 50 resource blocks (RBs), whilst in the time domain, 10 sub-frames are available, each of 1ms duration. The cooperative heterogeneous cell illustrated serves 6 users: MUE1, MUE2, SCUE1, SCUE2, SCUE3 and SCUE4.

### Cooperative heterogeneous cell

At a macrocell level, mapping of key system information (for example, primary synchronization signal, secondary synchronization signal, cell-specific reference signal, master information block, system information block and control channel size information) on to resource elements and the configuration of resource elements for the reception of key user information (for example, random access preamble and channel quality indicators) is substantially static and typically does not change in a very dynamic manner. As a result, small cells operating within a region of coverage supported by a macrocell base station may be operable to determine the appropriate macrocell configuration substantially independently rather than on commissioning of the base stations forming a network. A small cell base station may be operable to determine an umbrella macrocell configuration, for example, by interrogating or receiving information from an operation, administration, and maintenance (OAM) system within the wireless network, or by operating in a user/sniffing mode, connecting to the appropriate macrocell, learning the relevant key parameters and tuning its own operational parameters accordingly before operating as a small cell base station within the umbrella region.

### Spatial reuse

In order to allow spatial reuse within the cells forming a cooperative heterogeneous cell, it is helpful to coordinate which cell is to take scheduling decisions for each user. In order to facilitate such coordination the available bandwidth is divided, in one example, into two orthogonal subbands and a cell-size-specific reference symbol configuration is implemented.

By way of example, in the scenario illustrated in Figure 4 the available bandwidth, consisting of 50 resource blocks, is divided into two subbands: a macrocell subband comprising 25 resource blocks (RBs) and a small cell subband comprising 25 RBs. It will be appreciated that the relative size of each subband may be dynamically selected according to traffic load statistics among network tiers.

The umbrella macrocell is operable to transmit, or broadcast, cell-specific reference symbols on the resource blocks assigned to the macrocell subband, whilst small cells are operable to only transmit (the same) cell-specific reference symbols on the RBs assigned to the small cell subband.

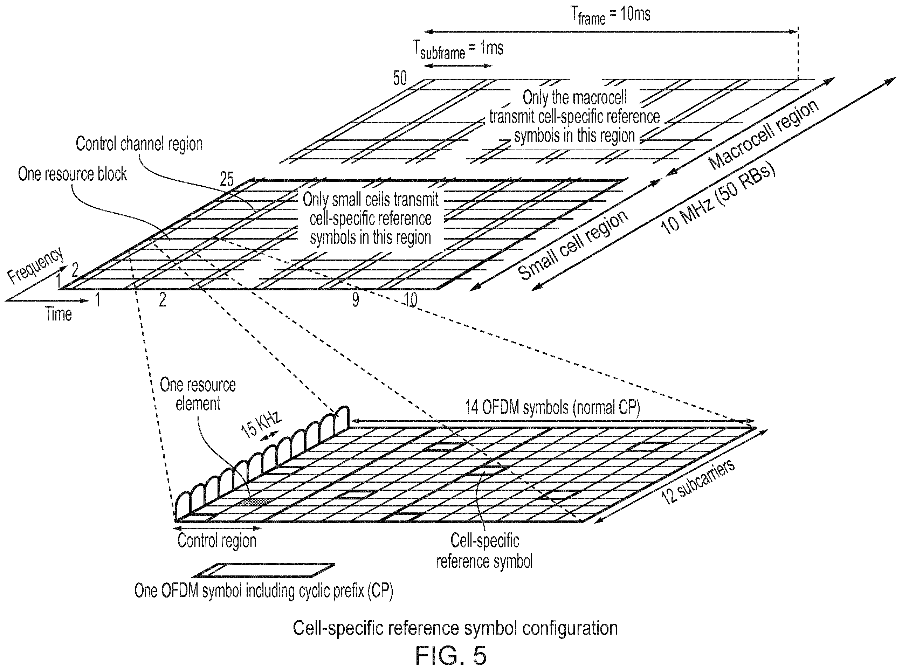

Use of such a cell-size-specific reference symbol configuration in a cooperative heterogeneous cell is shown in more detail in Figure 5 and can allow base stations forming the cooperative cell to distinguishing macrocell users from small cell users through their channel quality indicator measurements, as described further below.

Traditionally the mapping of cell-specific reference symbols onto resource elements of RBs is used to determine cell identity and the mapping is the same for all RBs of a cell. The proposed configuration follows the same procedure, in that as far as user equipment is aware, all resource blocks within the cooperative hetnet appear to have the same cell identity. The user equipment is unaware that some are being transmitted by an umbrella macrocell and others are being broadcast by the small cells. Such a "rearrangement" does not impact legacy user equipment, since the same mapping of cell-specific reference symbols onto resource elements of RBs is used for all RBs in the cooperative heterogeneous cell.

### Macrocell user and small cell user differentiation

The proposed cell-size-specific reference symbol transmissions can be taken into account by base stations in the cooperative hetnet cell when receiving channel quality indicator measurements fed back from users to nodes (for example, base stations) to assist the scheduling procedure. In particular, those measurements reported by user equipment are performed over all cell-size-specific reference symbols. As a result, user equipment that is close to a small cell will report through its channel quality indicators a higher signal quality in the small cell subband than in the macrocell subband. The opposite is true for users that are far from small cells. Based on reported channel quality indicators broadcast by user equipment and received by all nodes, that is to say, both the umbrella macrocell base station and small cell base stations, the nodes are able to classify users as macrocell users or small cell users.

It will be understood that use of a cell-size-specific reference signal allows use of channel quality indicators as an alternative to use of a classic reference signal received power (RSRP) based approach for identification of a serving cell, which cannot be applied within a cooperative heterogeneous cell since all its nodes transmit the same reference signal.

Use of a cell-size-specific reference signal configuration as described allows, for example, an umbrella macrocell to compare the quality of the macrocell subband and the small cell subband for each user equipment broadcasting such measurement information and, if the former is better than the latter, the umbrella macrocell may be operable to proceed with scheduling of that user equipment. According to some embodiments, there may be no need for explicit coordination between the umbrella macrocell and small cells for user differentiation, which can be advantageous.

The same analysis can be applied by small cells in respect of received measurement informations. However, if several small cells receive the channel quality indicator of a user with a better quality in the small subband than in the macrocell subband, these small cells may be operable, according to some embodiments, to coordinate, for example, via X2 signaling to determine which small cell will serve/schedule that user. Comparison of received signal strength of channel quality indicators across the small cell region may, according to some embodiments, be used to determine which small cell should schedule a particular user.

Turning again to the scenario illustrated in Figure 4, use of the proximity identification approach allows the macrocell and small cells 1 and 2 to determine that the six existing users can be classified as two macrocell users (MUE1 and MUE2) and four small cell users (SCUE1, SCUE2, SCUE3 and SCUE4).

### Allowing spatial reuse

In accordance with user cell type classification methods described above, if a user is a small cell user, a nearby small cell will typically be operable to take care of its scheduling decisions. Those scheduling decisions will typically be performed over the small cell band and use corresponding small cell band channel quality indicators.

If, however, a user is determined to be a macrocell user, the umbrella macrocell will typically take care of its scheduling decisions. Those scheduling decisions may be performed over the macrocell band or over the small cell subband.

In particular, according to some embodiments, macrocell users may be scheduled over the small cell subband if they report a very low signal quality in the small cell subband, since this is indicative that there are no small cells in the vicinity of the user and thus interference caused by scheduling the user to use small cell subbands is likely to be small. In this case, since the macrocell does not transmit cell-specific reference signals over the small cell subband, scheduling is assisted by channel quality indicators performed over the macrocell subband which act as wideband channel quality indicators.

Using such an approach, cross-tier interference among the umbrella macrocell and overlaid small cells can be significantly mitigated, and a large degree of spatial reuse can be achieved.

In order to realize spatial reuse, the different nodes within a cooperative heterogeneous cell are able to inform users of their scheduling decisions without interfering with scheduling decisions transmitted to users by other nodes. Typically downlink and uplink scheduling decisions and uplink power control commands are transmitted in downlink control channels, which are restricted such that they are mapped on to the three first OFDM symbols of each subframe and multiplexed across the entire bandwidth. Due to standard regulations, this "control channel region" cannot be divided into subbands and thus interference among scheduling decisions may be potentially high.

Successful decoding of scheduling decisions is necessary to ensure optimized user experience. In some embodiments, in order to avoid inter-cell interference amongst the control channels of the umbrella macrocell and small cells, the umbrella macrocell is operable to map scheduling decisions onto resource elements that are not used in the control region of small cells and vice versa. This kind of coordination can be achieved through macrocell and small cell cooperation. For example, if the umbrella macrocell and small cells are connected via a non-guaranteed performance back-haul link (macrocell-femtocell case) coordination may be implemented in a semi-static manner by implementing pre-planned macrocell-small cell control region usage. However, if the umbrella macrocell and overlaid small cells are connected though a high performance back-haul link (macrocell-picocell case) coordination may be performed in a more dynamic manner. In this case, control channel coding and mapping may be cooperatively performed, as in a cooperative relay paradigm.

Once coordination regarding control channel usage is achieved, small cells can locally reuse the control channel region area unused by an umbrella macrocell and co-tier interference among the control channels of small cells can be mitigated through classical approaches.

By enabling independent scheduling decisions across nodes of a cooperative heterogeneous cell, it is possible to achieve a significant degree of spatial reuse. In the scenario illustrated schematically by Figure 4, macrocell users MUE1 and MUE2 are able to reuse the entire spectrum, in dependence upon their measurement information. Small cell users SCUE1, SCUE2, SCUE3 and SCUE4 are operable to be scheduled to reuse the small cell subband. Macrocell user MUE1, which is distant from any small cell base station may be scheduled to reuse resources within the small cell subband, since they are determined by the macrocell base station to be free of small cell interference.

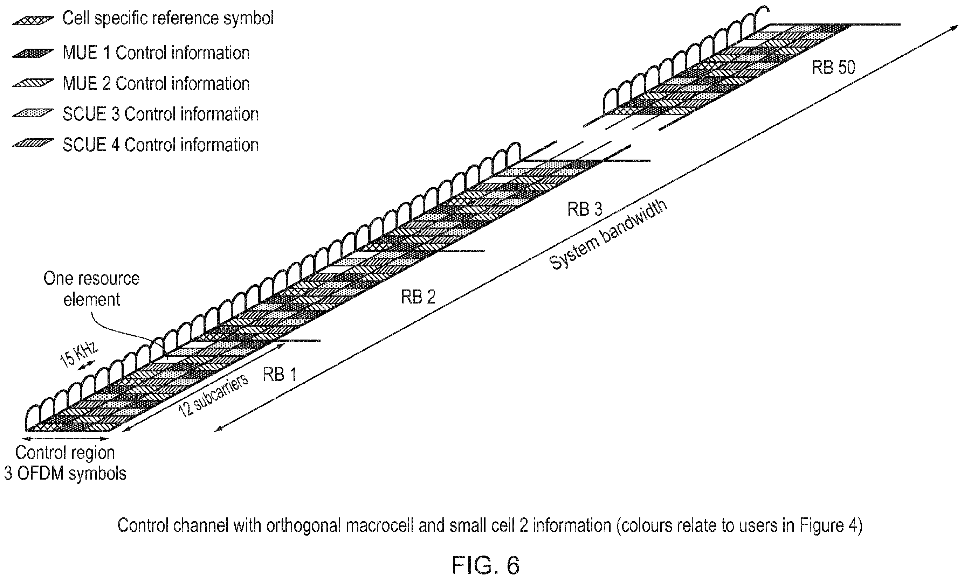

Figure 6 illustrates schematically control channel region usage of a macrocell and small cell base station in accordance with one embodiment. Figure 6 shows, superimposed for the sake of presentation, the control information broadcast by umbrella macrocell and small cell 2 in relation to MUE1, MUE2, SCUE3 and SCUE4. Their scheduling decisions are mapped onto orthogonal resource elements. The control channel information of small cell 1 (which is not shown in Figure 6 for the sake of clarity) also does not collide with that of the umbrella macrocell, and may occupy a similar set of resource elements to those used here by small cell 2.

### Example of operation

Consider a user that appears on the left hand side of the illustrative scenario presented in Figure 4 and moves horizontally towards the right hand side of the illustrated deployment. Such a user is operable to connect to the cooperative heterogeneous cell shown because its RSRP is determined to be larger than that of any neighboring cooperative heterogeneous cells. In this case, on entry to the cooperative heterogeneous cell, the user will be served by the umbrella macrocell (in terms of data) because it reports higher quality in the macrocell subband than in the small cell subband (small cell 1 and 2 are not geographically close to the new user). As the user continues moving to the right, it enters a region of radio coverage supported by small cell 1, and starts reporting a better quality in the small cell subband than in the macrocell subband. As a result, small cell 1 is operable to take care of the new user scheduling decisions. There is no need to start a macro-to-small cell handover procedure, since the user just sees a single cell-specific reference signal from all nodes in the cooperative heterogeneous cell. Note that it is likely that, from a user perspective, RSRP will increase as it enters a region of radio coverage supported by small cell 1, due to the reception of the cell-specific reference signal from both the macrocell and small cell 1.

If the new user continues to move to the right, it exits the region of radio coverage supported by small cell 1, and is likely to start reporting a better quality in the macrocell subband than in the small cell subband. As a result, the macrocell is then operable to takes care of the new user scheduling decisions. There is no need to start a small cell-to-macrocell handover procedure, since the user just sees a unique cell-specific reference signal from all nodes in the cooperative heterogeneous cell. RSRP at the user equipment decreases as the user continues moving to the right, since the cell-specific reference signal is only received from the macrocell and not from any small cells.

### Implications for metrocells

The approach described herein may be used to allow efficient metrocell or picocell deployments. Use of aspects and embodiments described herein may allow a large number of metrocells to be deployed in large hot spot areas, for example, downtown Madrid, whilst allowing seamless mobility for connected users, and incurring no handover failure, ping-pong effects or unnecessary handovers. PCI collision and confusion issues can also be significantly mitigated. Moreover, since spatial reuse and independent scheduling decisions at the umbrella macrocell and metrocells are allowed, hot spot users can still benefit from large throughputs. It will be appreciated that the approach described can work for operators supporting only one carrier too.

### Extensions

Aspects and embodiments described may be extended in various ways, for example: the techniques described may be extended for use in HetNets with multiple small cell tiers, and each small cells tier may (or may not) be allocated a set of orthogonal subbands. Orthogonally between the macrocell and small cell subband(s) may be retained.

In some embodiments, it is possible to implement dynamic selection of the relative sizes (bandwidths) of different subbands, for example, macrocell and small cell subbands, based on spatial and/or temporal traffic distribution of users between the umbrella macrocell and small cells within.

The principles described may be extended to HetNets with multiple carrier frequencies and carrier aggregation capabilities, where macrocell and small cells transmit the same system information, but control channels regions can be transmitted in different frequency carriers to avoid control-channel interference and successful decoding of scheduling decisions. In this way, the need for coordination in the mapping of downlink and uplink scheduling decisions as well as uplink power control commands to resource elements would be suppressed in the proposed solution. Carrier aggregation cross-scheduling would permit transmitting scheduling decisions in one carrier while the allocated resources are in a different carrier.

Aspects and embodiments described provide a method of configuring cells in a heterogeneous network structure and may avoid macrocell-to-small cell and small cell-to-macrocell handovers; reduce handover failures, ping-pongs effects and unnecessary handovers; allow spatial reuse among cells; significantly reduce PCI collision/confusion problems; be implemented even for operators with only one carrier; works with legacy handsets and there is no need for user mobility state estimation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A small cell base station deployable in a wireless telecommunications network in which at least one macro base station (20) provides a first region of radio coverage (30), said small cell base station being operable to provide a second region of radio coverage within said first region of radio coverage, said small cell base station comprising:
determination logic operable to determine key system information for broadcast, said key system information comprising cell-specific identity information such that broadcasting the same key system information by said at least one macro base station and said small cell base station makes them appear identical to user equipment (50) operating in said first and second region of radio coverage;
resource reservation logic operable to determine at least one resource block reserved for small cell use by receiving an allocation of said at least one resource block reserved for small cell use from said at least one macro base station;
broadcast logic operable to broadcast said key system information, said at least one resource block reserved for small cell use being used for broadcast of said cell-specific identity information; and
scheduling logic operable to receive channel quality indicator measurement information from user equipment (50) based on said broadcast system information received at said user equipment, said channel quality indicator measurement information comprising an indication of whether said user equipment is operating in said second region of radio coverage; said scheduling logic being operable to base scheduling decisions for said user equipment on said received channel quality indicator measurement information.

2. A small cell base station according to claim 1, wherein determining key system information comprises monitoring broadcast messages within said network to receive an indication of said key system information.

3. A small cell base station according to claim 1 or claim 2, wherein said at least one resource block reserved for small cell use is orthogonal to at least one remaining resource block.

4. A small cell base station according to any preceding claim, wherein said allocation of said at least one resource block reserved for small cell use comprises an allocation generated in response to ambient network condition.

5. A small cell base station according to any preceding claim, wherein if said channel quality indicator measurement information indicates said user equipment is operating in said second region of radio coverage, said scheduling logic is operable to take scheduling decisions for said user equipment.

6. A small cell base station according to any preceding claim, wherein said scheduling logic is operable to take scheduling decisions for said user equipment and schedule said user equipment to operate using said at least one resource block reserved for small cell use.

7. A method of providing a second region of radio coverage in a wireless telecommunications network in which at least one macro base station (20) provides a first region of radio coverage (30), a small cell base station being operable to provide said second region of radio coverage within said first region of radio coverage, said method being performed by the small cell base station and comprising:
determining key system information for broadcast such that said at least one macro base station and said small cell base station appear identical to user equipment operating in said first and second region of radio coverage by broadcasting the same key system information, said key system information comprising cell-specific identity information;
determining at least one resource block reserved for small cell use by receiving an allocation of said at least one resource block reserved for small cell use from said at least one macro base station;
broadcasting said key system information, said at least one resource block reserved for small cell use being used for broadcast of said cell-specific identity information;
receiving channel quality indicator measurement information from user equipment based on said broadcast system information received at said user equipment, said channel quality indicator measurement information comprising an indication of whether said user equipment is operating in said second region of radio coverage; and basing scheduling decisions for said user equipment on said received channel quality indicator measurement information.

8. A macro cell base station (20) deployable in a wireless telecommunications network in which said macro base station is operable to provide a first region of radio coverage (30) and at least one small cell base station provides a second region of radio coverage within said first region of radio coverage, said macro cell base station comprising:
resource reservation logic operable to determine at least one resource block reserved for macro cell use, and at least one resource block reserved for small cell use;
resource allocation logic operable to allocate said at least one resource block to be reserved for small cell use and said at least one resource block to be reserved for macro cell use;
broadcast logic operable to broadcast key system information using said at least one resource block reserved for macro cell use to user equipment operating in said first and second region of radio coverage, said key system information comprising cell-specific identity information, such that broadcasting the same key system information by said macro base station and said at least one small cell base station makes them appear identical to user equipment (50) operating in said first and second region of radio coverage;
scheduling logic operable to receive channel quality indicator measurement information from user equipment based on said broadcast system information, said broadcast key system information being identical for said macro cell and for said at least one small cell;
said channel quality indicator measurement information comprising an indication of whether said user equipment is operating in said first region of radio coverage or in said second region of radio coverage; said scheduling logic being operable to base scheduling decisions for said user equipment on said received channel quality indicator measurement information.

9. A macro base station according to claim 8, wherein determining at least one resource block reserved for macro cell use comprises determining an allocation generated in response to an indication of ambient network condition.

10. A macro base station (20) according to claim 9 or 10, wherein said scheduling logic is operable to take scheduling decisions for said user equipment (50) and schedule said user equipment to operate using any available resource block.

11. A method of providing a first region (30) of coverage in a wireless telecommunications network in which a macro base station (20) is operable to provide said first region of radio coverage and at least one small cell base station provides a second region of radio coverage within said first region of radio coverage, said method being performed by the macro base station and comprising:
determining at least one resource block reserved for macro cell use and at least one resource block reserved for small cell use;
allocating said at least one resource block to be reserved for small cell use and said at least one resource block to be used for macro cell use;
broadcasting key system information using said at least one resource block reserved for macro cell use to user equipment (50) operating in said first and second region of radio coverage, said key system information comprising cell-specific identity information such that broadcasting the same key system information by said macro base station and said at least one small cell base station makes them appear identical to user equipment operating in said first and second region of radio coverage;
receiving channel quality indicator measurement information from user equipment based on said broadcast system information received at said user equipment, said channel quality indicator measurement information comprising an indication of whether said user equipment is operating in said first region of radio coverage or in said second region of radio coverage; and
basing scheduling decisions for said user equipment on said received channel quality indicator measurement information.

12. A computer program product operable, when executed on a computer, to perform the method of claim 7 or claim 11.

13. A wireless telecommunications network comprising:
at least one macro base station (20) according to any one of claims 8-10, operable to provide a first region of radio coverage (30); and
at least one small cell base station according to any one of claims 1 to 6, operable to provide a second region of radio coverage within said first region of radio coverage;
said broadcast logic of said at least one macro base station and said at least one small cell base station each being operable to broadcast identical key system information comprising cell-specific identity information such that said at least one macro base station and said at least one small cell base station appear identical to user equipment (50) operating in said first and second region of radio coverage.

## Patentansprüche

1. Small Cell-Basisstation, die in einem drahtlosen Telekommunikationsnetzwerk einsetzbar ist, in dem zumindest eine Makrobasisstation (20) einen ersten Funkabdeckungsbereich (30) bereitstellt, wobei die Small Cell-Basisstation betreibbar ist, um einen zweiten Funkabdeckungsbereich innerhalb des ersten Funkabdeckungsbereichs bereitzustellen, die Small Cell-Basisstation umfassend:
Bestimmungslogik, die betreibbar ist, um Schlüsselsysteminformationen zum Senden zu bestimmen, die Schlüsselsysteminformationen umfassend zellspezifische Identitätsinformationen, sodass ein Senden der gleichen Schlüsselsysteminformationen durch die zumindest eine Makrobasisstation und die Small Cell-Basisstation diese als mit Benutzerausrüstung (50), die in dem ersten und zweiten Funkabdeckungsbereich betrieben wird, identisch erscheinen lässt;
Ressourcenreservierungslogik, die betreibbar ist, um zumindest einen Ressourcenblock zu bestimmen, der zur Small Cell-Verwendung reserviert ist, indem eine Zuordnung des zumindest einen Ressourcenblocks, der zur Small Cell-Verwendung reserviert ist, von der zumindest einen Makrobasisstation empfangen wird;
Sendelogik, die betreibbar ist, um die Schlüsselsysteminformationen zu senden, wobei der zumindest eine Ressourcenblock, der zur Small Cell-Verwendung reserviert ist, zum Senden der zellspezifischen Identitätsinformationen verwendet wird; und
Planungslogik, die betreibbar ist, um Kanalqualitätsindikatormessinformationen von Benutzerausrüstung (50) basierend auf den Sendesysteminformationen, die an der Benutzerausrüstung empfangen werden, zu empfangen, die Kanalqualitätsindikatormessinformationen umfassend eine Angabe, ob die Benutzerausrüstung in dem zweiten Funkabdeckungsbereich betrieben wird; wobei die Planungslogik betreibbar ist, um Planungsentscheidungen für die Benutzerausrüstung auf den empfangenen Kanalqualitätsindikatormessinformationen zu basieren.

2. Small Cell-Basisstation nach Anspruch 1, wobei das Bestimmen von Schlüsselsysteminformationen ein Überwachen von Sendenachrichten innerhalb des Netzwerks umfasst, um eine Angabe der Schlüsselsysteminformationen zu empfangen.

3. Small Cell-Basisstation nach Anspruch 1 oder Anspruch 2, wobei der zumindest eine Ressourcenblock, der zur Small Cell-Verwendung reserviert ist, orthogonal zu zumindest einem übrigen Ressourcenblock ist.

4. Small Cell-Basisstation nach einem der vorhergehenden Ansprüche, wobei die Zuordnung des zumindest einen Ressourcenblocks, der zur Small Cell-Verwendung reserviert ist, eine Zuordnung umfasst, die als Reaktion auf einen Umgebungsnetzwerkzustand erzeugt wird.

5. Small Cell-Basisstation nach einem der vorhergehenden Ansprüche, wobei, wenn die Kanalqualitätsindikatormessinformationen angeben, dass die Benutzerausrüstung in dem zweiten Funkabdeckungsbereich betrieben wird, die Planungslogik betreibbar ist, um Planungsentscheidungen für die Benutzerausrüstung zu treffen.

6. Small Cell-Basisstation nach einem der vorhergehenden Ansprüche, wobei die Planungslogik betreibbar ist, um Planungsentscheidungen für die Benutzerausrüstung zu treffen und zu planen, dass die Benutzerausrüstung unter Verwendung des zumindest einen Ressourcenblocks, der zur Small Cell-Verwendung reserviert ist, betrieben wird.

7. Verfahren zum Bereitstellen eines zweiten Funkabdeckungsbereichs in einem drahtlosen Telekommunikationsnetzwerk, in dem zumindest eine Makrobasisstation (20) einen ersten Funkabdeckungsbereich (30) bereitstellt, wobei eine Small Cell-Basisstation betreibbar ist, um den zweiten Funkabdeckungsbereich innerhalb des ersten Funkabdeckungsbereichs bereitzustellen, wobei das Verfahren durch die Small Cell-Basisstation durchgeführt wird und umfasst:
Bestimmen von Schlüsselsysteminformationen zum Senden, sodass die zumindest eine Makrobasisstation und die Small Cell-Basisstation als mit Benutzerausrüstung, die in dem ersten und zweiten Funkabdeckungsbereich betrieben wird, identisch erscheinen, durch Senden der gleichen Schlüsselsysteminformationen, die Schlüsselsysteminformationen umfassend zellspezifische Identitätsinformationen;
Bestimmen von zumindest einem Ressourcenblock, der zur Small Cell-Verwendung reserviert ist, indem eine Zuordnung des zumindest einen Ressourcenblocks, der zur Small Cell-Verwendung reserviert ist, von der zumindest einen Makrobasisstation empfangen wird;
Senden der Schlüsselsysteminformationen, wobei der zumindest eine Ressourcenblock, der zur Small Cell-Verwendung reserviert ist, zum Senden der zellspezifischen Identitätsinformationen verwendet wird;
Empfangen von Kanalqualitätsindikatormessinformationen von Benutzerausrüstung basierend auf den Sendesysteminformationen, die an der Benutzerausrüstung empfangen werden, die Kanalqualitätsindikatormessinformationen umfassend eine Angabe, ob die Benutzerausrüstung in dem zweiten Funkabdeckungsbereich betrieben wird; und Basieren von Planungsentscheidungen für die Benutzerausrüstung auf den empfangenen Kanalqualitätsindikatormessinformationen.

8. Makrozellenbasisstation (20), die in einem drahtlosen Telekommunikationsnetzwerk einsetzbar ist, in dem die Makrobasisstation betreibbar ist, um einen ersten Funkabdeckungsbereich (30) bereitzustellen, und zumindest eine Small Cell-Basisstation einen zweiten Funkabdeckungsbereich innerhalb des ersten Funkabdeckungsbereichs bereitstellt, die Makrozellenbasisstation umfassend:
Ressourcenreservierungslogik, die betreibbar ist, um zumindest einen Ressourcenblock, der zur Makrozellenverwendung reserviert ist, und zumindest einen Ressourcenblock, der zur Small Cell-Verwendung reserviert ist, zu bestimmen;
Ressourcenzuordnungslogik, die betreibbar ist, um den zumindest einen Ressourcenblock, der zur Small Cell-Verwendung zu reservieren ist, und den zumindest einen Ressourcenblock, der zur Makrozellenverwendung zu reservieren ist, zuzuordnen;
Sendelogik, die betreibbar ist, um Schlüsselsysteminformationen unter Verwendung des zumindest einen Ressourcenblocks, der zur Makrozellenverwendung reserviert ist, zu Benutzerausrüstung, die in dem ersten und zweiten Funkabdeckungsbereich betrieben wird, zu senden, die Schlüsselsysteminformationen umfassend zellspezifische Identitätsinformationen, sodass ein Senden der gleichen Schlüsselsysteminformationen durch die Makrobasisstation und die zumindest eine Small Cell-Basisstation diese als mit Benutzerausrüstung (50), die in dem ersten und zweiten Funkabdeckungsbereich betrieben wird, identisch erscheinen lässt;
Planungslogik, die betreibbar ist, um Kanalqualitätsindikatormessinformationen von Benutzerausrüstung basierend auf den Sendesysteminformationen zu empfangen, wobei die gesendeten Schlüsselsysteminformationen für die Makrozelle und für die zumindest eine Small Cell identisch sind;
die Kanalqualitätsindikatormessinformationen umfassend eine Angabe, ob die Benutzerausrüstung in dem ersten Funkabdeckungsbereich oder in dem zweiten Funkabdeckungsbereich betrieben wird; wobei die Planungslogik betreibbar ist, um Planungsentscheidungen für die Benutzerausrüstung auf den empfangenen Kanalqualitätsindikatormessinformationen zu basieren.

9. Makrobasisstation nach Anspruch 8, wobei das Bestimmen von zumindest einem Ressourcenblock, der zur Makrozellenverwendung reserviert ist, ein Bestimmen einer Zuordnung, die als Reaktion auf eine Angabe eines Umgebungsnetzwerkzustands erzeugt wird, umfasst.

10. Makrobasisstation (20) nach Anspruch 9 oder 10, wobei die Planungslogik betreibbar ist, um Planungsentscheidungen für die Benutzerausrüstung (50) zu treffen und zu planen, dass die Benutzerausrüstung unter Verwendung eines beliebigen verfügbaren Ressourcenblocks betrieben wird.

11. Verfahren zum Bereitstellen eines ersten Abdeckungsbereichs (30) in einem drahtlosen Telekommunikationsnetzwerk, in dem eine Makrobasisstation (20) betreibbar ist, um den ersten Funkabdeckungsbereich bereitzustellen, und zumindest eine Small Cell-Basisstation einen zweiten Funkabdeckungsbereich innerhalb des ersten Funkabdeckungsbereichs bereitstellt, wobei das Verfahren durch die Makrozellenbasisstation durchgeführt wird und umfasst:
Bestimmen von zumindest einem Ressourcenblock, der zur Makrozellenverwendung reserviert ist, und zumindest einem Ressourcenblock, der zur Small Cell-Verwendung reserviert ist;
Zuordnen des zumindest einen Ressourcenblocks, der zur Small Cell-Verwendung zu reservieren ist, und des zumindest einen Ressourcenblocks, der zur Makrozellenverwendung zu verwenden ist;
Senden von Schlüsselsysteminformationen unter Verwendung des zumindest einen Ressourcenblocks, der zur Makrozellenverwendung reserviert ist, zu Benutzerausrüstung (50), die in dem ersten und zweiten Funkabdeckungsbereich betrieben wird, die Schlüsselsysteminformationen umfassend zellspezifische Identitätsinformationen, sodass ein Senden der gleichen Schlüsselsysteminformationen durch die Makrobasisstation und die zumindest eine Small Cell-Basisstation diese als mit Benutzerausrüstung, die in dem ersten und zweiten Funkabdeckungsbereich betrieben wird, identisch erscheinen lässt;
Empfangen von Kanalqualitätsindikatormessinformationen von Benutzerausrüstung basierend auf den Sendesysteminformationen, die an der Benutzerausrüstung empfangen werden, die Kanalqualitätsindikatormessinformationen umfassend eine Angabe, ob die Benutzerausrüstung in dem ersten Funkabdeckungsbereich oder in dem zweiten Funkabdeckungsbereich betrieben wird; und
Basieren von Planungsentscheidungen für die Benutzerausrüstung auf den empfangenen Kanalqualitätsindikatormessinformationen.

12. Computerprogrammprodukt, das bei Ausführung auf einem Computer betreibbar ist, um das Verfahren nach Anspruch 7 oder Anspruch 11 durchzuführen.

13. Drahtloses Telekommunikationsnetzwerk, umfassend:
zumindest eine Makrobasisstation (20) nach einem der Ansprüche 8-10, die betreibbar ist, um einen ersten Funkabdeckungsbereich (30) bereitzustellen; und
zumindest eine Small Cell-Basisstation nach einem der Ansprüche 1 bis 6, die betreibbar ist, um einen zweiten Funkabdeckungsbereich innerhalb des ersten Funkabdeckungsbereichs bereitzustellen;
wobei die Sendelogik der zumindest einen Makrobasisstation und der zumindest einen Small Cell-Basisstation jeweils betreibbar ist, um identische Schlüsselsysteminformationen, umfassend zellspezifische Identitätsinformationen, zu senden, sodass die zumindest eine Makrobasisstation und die zumindest eine Small Cell-Basisstation als mit Benutzerausrüstung (50), die in dem ersten und zweiten Funkabdeckungsbereich betrieben wird, identisch erscheinen.

## Revendications

1. Station de base de petite cellule déployable dans un réseau de télécommunication sans fil dans lequel au moins une station de base macro (20) fournit une première région de couverture radio (30), ladite station de base de petite cellule ayant pour fonction de fournir une deuxième région de couverture radio au sein de ladite première région de couverture radio, ladite station de base de petite cellule comprenant :
une logique de détermination ayant pour fonction de déterminer des informations système clés à des fins de diffusion, lesdites informations système clés comprenant des informations d'identité spécifique de cellule de sorte que la diffusion des mêmes informations système clés par ladite au moins une station de base macro et ladite station de base de petite cellule les fait apparaître identiques vis-à-vis d'un équipement utilisateur (50) fonctionnant dans ladite première et ladite deuxième région de couverture radio ;
une logique de réservation de ressources ayant pour fonction de déterminer au moins un bloc de ressources réservé à des fins d'utilisation en petite cellule en recevant une allocation dudit au moins un bloc de ressources réservé à des fins d'utilisation en petite cellule en provenance de ladite au moins une station de base macro ;
une logique de diffusion ayant pour fonction de diffuser lesdites informations système clés, ledit au moins un bloc de ressources réservé à des fins d'utilisation en petite cellule étant utilisé pour la diffusion desdites informations d'identité spécifique de cellule ; et
une logique d'ordonnancement ayant pour fonction de recevoir des informations de mesure d'indicateur de qualité de canal en provenance de l'équipement utilisateur (50) sur la base desdites informations système diffusées reçues au niveau dudit équipement utilisateur, lesdites informations de mesure d'indicateur de qualité de canal comprenant une indication si ledit équipement utilisateur fonctionne ou non actuellement dans ladite deuxième région de couverture radio ; ladite logique d'ordonnancement ayant pour fonction de baser des décisions d'ordonnancement pour ledit équipement utilisateur sur lesdites informations de mesure d'indicateur de qualité de canal reçues.

2. Station de base de petite cellule selon la revendication 1, dans laquelle la détermination d'informations système clés comprend la scrutation de messages diffusés au sein dudit réseau dans le but de recevoir une indication desdites informations système clés.

3. Station de base de petite cellule selon la revendication 1 ou la revendication 2, dans laquelle ledit au moins un bloc de ressources réservé à des fins d'utilisation en petite cellule est orthogonal à au moins un bloc de ressources restant.

4. Station de base de petite cellule selon l'une quelconque des revendications précédentes, dans laquelle ladite allocation dudit au moins un bloc de ressources réservé à des fins d'utilisation en petite cellule comprend une allocation générée en réponse à une condition de réseau ambiante.

5. Station de base de petite cellule selon l'une quelconque des revendications précédentes, dans laquelle, si lesdites informations de mesure d'indication de qualité de canal indiquent que ledit équipement utilisateur fonctionne actuellement dans ladite deuxième région de couverture radio, ladite logique d'ordonnancement a pour fonction de prendre des décisions d'ordonnancement pour ledit équipement utilisateur.

6. Station de base de petite cellule selon l'une quelconque des revendications précédentes, dans laquelle ladite logique d'ordonnancement a pour fonction de prendre des décisions d'ordonnancement pour ledit équipement utilisateur et d'ordonnancer ledit équipement utilisateur pour qu'il fonctionne en utilisant ledit au moins un bloc de ressources réservé à des fins d'utilisation en petite cellule.

7. Procédé permettant de fournir une deuxième région de couverture radio dans un réseau de télécommunication sans fil dans lequel au moins une station de base macro (20) fournit une première région de couverture radio (30), une station de base de petite cellule ayant pour fonction de fournir ladite deuxième région de couverture radio au sein de ladite première région de couverture radio, ledit procédé étant mis en œuvre par la station de base de petite cellule et comprenant :
la détermination d'informations système clés à des fins de diffusion de sorte que ladite au moins une station de base macro et ladite station de base de petite cellule apparaissent identiques vis-à-vis d'un équipement utilisateur fonctionnant dans ladite première et ladite deuxième région de couverture radio par diffusion des mêmes informations système clés, lesdites informations système clés comprenant des informations d'identité spécifique de cellule ;
la détermination d'au moins un bloc de ressources réservé à des fins d'utilisation en petite cellule par réception d'une allocation dudit au moins un bloc de ressources réservé à des fins d'utilisation en petite cellule en provenance de ladite au moins une station de base macro ;
la diffusion desdites informations système clés, ledit au moins un bloc de ressources réservé à des fins d'utilisation en petite cellule étant utilisé pour la diffusion desdites informations d'identité spécifique de cellule ;
la réception d'informations de mesure d'indicateur de qualité de canal en provenance de l'équipement utilisateur sur la base desdites informations système diffusées reçues au niveau dudit équipement utilisateur, lesdites informations de mesure d'indicateur de qualité de canal comprenant une indication si ledit équipement utilisateur fonctionne ou non actuellement dans ladite deuxième région de couverture radio ; et la prise de décisions d'ordonnancement pour ledit équipement utilisateur sur la base desdites informations de mesure d'indicateur de qualité de canal reçues.

8. Station de base (20) de cellule macro déployable dans un réseau de télécommunication sans fil dans lequel ladite station de base macro a pour fonction de fournir une première région de couverture radio (30) et au moins une station de base de petite cellule fournit une deuxième région de couverture radio au sein de ladite première région de couverture radio, ladite station de base de cellule macro comprenant :
une logique de réservation de ressources ayant pour fonction de déterminer au moins un bloc de ressources réservé à des fins d'utilisation en cellule macro et au moins un bloc de ressources réservé à des fins d'utilisation en petite cellule ;
une logique d'allocation de ressources ayant pour fonction d'allouer ledit au moins un bloc de ressources à réserver à des fins d'utilisation en petite cellule et ledit au moins un bloc de ressources à réserver à des fins d'utilisation en cellule macro ;
une logique de diffusion ayant pour fonction de diffuser des informations système clés en utilisant ledit au moins un bloc de ressources réservé à des fins d'utilisation en cellule macro vers un équipement utilisateur fonctionnant dans ladite première et ladite deuxième région de couverture radio, lesdites informations système clés comprenant des informations d'identité spécifique de cellule, de sorte que la diffusion des mêmes informations système clés par ladite station de base macro et ladite au moins une station de base de petite cellule les fait apparaître identiques vis-à-vis de l'équipement utilisateur (50) fonctionnant dans ladite première et ladite deuxième région de couverture radio ;
une logique d'ordonnancement ayant pour fonction de recevoir des informations de mesure d'indicateur de qualité de canal en provenance de l'équipement utilisateur sur la base desdites informations système diffusées, lesdites informations système clés diffusées étant identiques pour ladite cellule macro et pour ladite au moins une petite cellule ;
lesdites informations de mesure d'indicateur de qualité de canal comprenant une indication si ledit équipement utilisateur fonctionne actuellement dans ladite première région de couverture radio ou dans ladite deuxième région de couverture radio ; ladite logique d'ordonnancement ayant pour fonction de baser des décisions d'ordonnancement pour ledit équipement utilisateur sur lesdites informations de mesure d'indicateur de qualité de canal reçues.

9. Station de base macro selon la revendication 8, dans laquelle la détermination d'au moins un bloc de ressources réservé à des fins d'utilisation en cellule macro comprend la détermination d'une allocation générée en réponse à une indication d'une condition de réseau ambiante.

10. Station de base macro (20) selon la revendication 9 ou 10, dans laquelle ladite logique d'ordonnancement a pour fonction de prendre des décisions d'ordonnancement pour ledit équipement utilisateur (50) et d'ordonnancer ledit équipement utilisateur pour qu'il fonctionne en utilisant n'importe quel bloc de ressources disponible.

11. Procédé permettant de fournir une première région (30) de couverture dans un réseau de télécommunication sans fil dans lequel une station de base macro (20) a pour fonction de fournir ladite première région de couverture radio et au moins une station de base de petite cellule fournit une deuxième région de couverture radio au sein de ladite première région de couverture radio, ledit procédé étant mis en œuvre par la station de base macro et comprenant :
la détermination d'au moins un bloc de ressources réservé à des fins d'utilisation en cellule macro et d'au moins un bloc de ressources réservé à des fins d'utilisation en petite cellule ;
l'allocation dudit au moins un bloc de ressources à réserver à des fins d'utilisation en petite cellule et dudit au moins un bloc de ressources à utiliser à des fins d'utilisation en cellule macro ;
la diffusion d'informations système clés en utilisant ledit au moins un bloc de ressources réservé à des fins d'utilisation en cellule macro vers un équipement utilisateur (50) fonctionnant dans ladite première et ladite deuxième région de couverture radio, lesdites informations système clés comprenant des informations d'identité spécifique de cellule de sorte que la diffusion des mêmes informations système clés par ladite station de base macro et ladite au moins une station de base de petite cellule les fait apparaître identiques vis-à-vis de l'équipement utilisateur fonctionnant dans ladite première et ladite deuxième région de couverture radio ;
la réception d'informations de mesure d'indicateur de qualité de canal en provenance de l'équipement utilisateur sur la base desdites informations système diffusées reçues au niveau dudit équipement utilisateur, lesdites informations de mesure d'indicateur de qualité de canal comprenant une indication si ledit équipement utilisateur fonctionne actuellement dans ladite première région de couverture radio ou dans ladite deuxième région de couverture radio ; et
la prise de décisions d'ordonnancement pour ledit équipement utilisateur sur la base desdites informations de mesure d'indicateur de qualité de canal reçues.

12. Produit-programme d'ordinateur ayant pour fonction, une fois exécuté sur un ordinateur, de réaliser le procédé selon la revendication 7 ou la revendication 11.

13. Réseau de télécommunication sans fil, comprenant :
au moins une station de base macro (20) selon l'une quelconque des revendications 8 à 10, ayant pour fonction de fournir une première région de couverture radio (30) ; et
au moins une station de base de petite cellule selon l'une quelconque des revendications 1 à 6, ayant pour fonction de fournir une deuxième région de couverture radio au sein de ladite première région de couverture radio ;
ladite logique de diffusion de ladite au moins une station de base macro et de ladite station de base de petite cellule ayant chacune pour fonction de diffuser des informations système clés comprenant des informations d'identité spécifique de cellule de sorte que ladite au moins une station de base macro et ladite au moins une station de base de petite cellule apparaissent identiques vis-à-vis d'un équipement utilisateur (50) fonctionnant dans ladite première et ladite deuxième région de couverture radio.
